# EUROPEAN PATENT APPLICATION

(11) **EP 2 000 765 A2**
(43) Date of publication of application: **10.12.2008**
(21) Application number: 07739583.8
(22) Date of filing: 19.03.2007
(51) Int. Cl.: G01B 7/16, G01L 1/22

(54) **STRAIN GAUGE MANUFACTURING METHOD**

(30) Priority: 30.03.2006 JP 2006093710
(71) Applicant: Millennium Gate Technology Co., Ltd., Higashiosaka-shi, Osaka 577-0834 (JP); JTEKT Corporation, Osaka-shi Osaka 542-8502 (JP)
(72) Inventor: TAKEUCHI, Isamu Millenium Gate Technology Co., Ltd, Osaka-shi, Osaka 577-0001 (JP); MINAMIYAMA, Hideaki Millenium Gate Technology Co., Ltd, Osaka-shi, Osaka 547-0001 (JP); UENO, Hiroshi, Osaka-shi, Osaka 5428502 (JP); MIZUTA, Shinichi, Osaka-shi, Osaka 542-8502 (JP)
(74) Representative: Koepe, Gerd L.
(86) International application number: PCT/JP2007/056144
(87) International publication number: WO 2007/114088

(57) **Abstract**

The present invention provides a method for producing a strain gauge with which in-line production is possible. The method of the present invention comprises the steps of: preparing a transfer foil film that is obtained by coating an adhesive resin film with a foil made from a resistant material; applying the adhesive resin film surface of the transfer foil film to a desired section of an outer surface of an object whose strain is to be measured; and processing the transfer foil film to transfer a foil gauge pattern to the object via the adhesive resin.

## Description

### Technical Field

The present invention relates to a method for producing a strain gauge. More specifically, the present invention relates to a method for producing a strain gauge such as a foil gauge that allow to be disposed directly on a bearing, for example.

### Background Art

In bearings that employ a rolling element, a pre-load is generally applied to the rolling element with the aim of increasing the stiffness, or with the aim of eliminating clearance in order to prevent slight movement or abrasion during carrying. Conventionally, the pre-load itself has not been measured, and for example, the pre-load was often measured indirectly based on the value of the tightening torque or was applied according to the judgment of the technician. Thus, there was a possibility that the pre-load would not be properly set.

It discloses that a pressure sensor such as a strain gauge is provided on the outer surface of bearing in order to directly measure the pre-load (Japanese Laid-Open Patent Publication No. 2002-213438). This reference discloses that a groove is provided in the outer surface of the bearing, and a pressure sensor is accommodated within this groove. It has also been reported that the pressure sensor allows to monitor the value of the pre-load that is applied by tightening the nut so as to set the pre-load to a proper value.

Foil gauges, which are a general strain gauge, have a structure in which a resistant foil having several microns thick is adhered in a pattern onto the base such as a plastic through photoetching or the like, and ordinarily the foil gauge is attached to the object to be measured with an adhesive agent. Thus, wet processing is frequently used in the producing of foil gauges, and moreover, it is necessary to individually adhere a base on which the foil gauge is adhered to an object to be measured. It was therefore difficult to attach a strain gauge to the bearing in-line during the bearing producing process.

### Disclosure of the Invention

It is an object of the present invention to provide a method for producing a strain gauge with which in-line production is possible.

The present invention provides a method for producing a strain gauge, the method comprises the steps of: preparing a transfer foil film that is obtained by coating an adhesive resin film with a foil made from a resistant material; applying the adhesive resin film surface of the transfer foil film to a desired section of an outer surface of an object whose strain is to be measured; and processing the transfer foil film to transfer a foil gauge pattern to the object via the adhesive resin.

In a preferable embodiment, the resistant material is selected from the group consisting of copper-nickel alloys, nickel-chrome alloys, copper-manganese alloys, and iron-chrome alloys.

In a more preferable embodiment, a lead line is disposed on the transfer foil film such that the lead line is in contact with the foil made from the resistant material.

In a preferable embodiment, the adhesive resin is a thermosetting adhesive resin.

In a further preferable embodiment, the object is a bearing.

The present invention also provides a foil strain gauge made from a resistant material, which has been transferred onto an outer surface of a member via an adhesive resin.

According to the method of the present invention, it is possible to employ simple means to directly attach a strain gauge to the surface of an object to be measured. Moreover, according to the method of the present invention, it is possible to attach the strain gauge on the object to be measured in the production line of the object.

### Brief Description of the Drawings

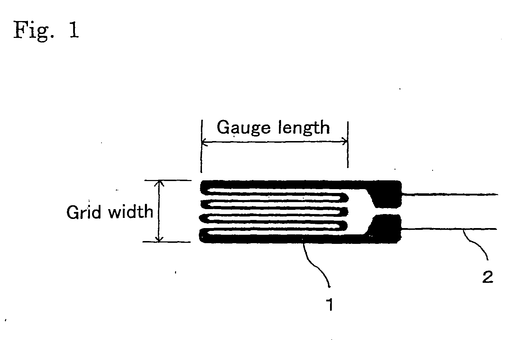

Fig. 1 is a schematic illustration that shows an example of the foil gauge pattern.

### Best Mode for Carrying Out the Invention

Strain gauges use the characteristic that the electrical resistance is changed when strain is received. The strain gauges are classified depending on the type of the resistance element that receives this strain, and include foil gauges, line gauges, and semiconductor gauges, for example. In the present invention, a strain gauge means mainly a foil strain gauge.

As shown in Fig. 1, a foil gauge for example has a pattern that is formed by a foil made from a resistant material (resistant foil) as the resistance element, and has a given gauge length, a given grid width, and a number of elements such that it has a predetermined resistance for an object to be measured. The gauge length of a foil gauge 1 is ordinarily 0.15 to 120 mm, the grid width is ordinarily 0.1 to 50 mm, and in general, the foil gauge 1 is about several mm x several mm in size.

There are no particular limitations regarding the resistant material, as long as it is a material that can be used as a resistant foil. Examples of such a resistant material include copper-nickel alloys (such as constantan and advance), nickel-chrome alloys (such as nichrome and karma), copper-manganese alloys (such as manganin, isaberin, and novoconstant), and iron-chrome alloys. A resistant material with a desired resistance may be suitably selected.

The adhesive resin film used in the present invention is a film that is primarily made from an organic polymer adhesive resin. In the present invention, an adhesive resin film that is cured by heating, pressurizing, ultraviolet radiation, or electron beam radiation, for example, is preferable. Examples of such an adhesive resin include thermosetting adhesive resins (such as phenolic resins, urea resins, epoxy resins, and urethane adhesive resins), pressure sensitive adhesive resins, and photosensitive adhesive resins. In the present invention, thermosetting adhesive resins are preferable due to their adhesive force and ease of transfer. The adhesive resin film ordinarily has a thickness of approximately 0.1 to 5 µm.

In the present invention, the transfer foil film is a film obtained by coating the adhesive resin film with a foil (thin film) made from the resistant material. The foil, i.e., the resistant material is substantially uniformly coated over one side of the adhesive resin film by means generally used by persons skilled in the art, such as vacuum deposition, sputtering, and plating. It is not necessary to form a foil gauge pattern on the transfer foil film. There are no particular limitations regarding the thickness of the foil (thin film), but normally this is several µm thick, and preferably approximately 0.1 to 2.0 µm thick.

If necessary, the transfer foil film may be coated with a transfer protective film for protecting the foil at the time of transfer. Examples of such a transfer protective film include polyester films, for example.

Alternatively, if necessary, it is also possible to dispose a plurality of lead lines of a given length at a predetermined spacing on the transfer foil film such that the lead lines are in contact with the foil. As shown in Fig. 1, a lead line 2 is provided, for the sake of convenience, with the goal of linking the foil gauge 1 and a device to measure the change in electrical resistance when current is passed to the foil gauge 1. The lead line 2 can, for example, be connected to the resistance film by soldering or spot welding.

In the present invention, there are no particular limitations regarding the object whose strain is to be measured, as long as the object is a solid member. Specifically, examples of the object include members such as bearings, torque meters, and pressure gauges.

The method for producing a strain gauge of the present invention is described in greater detail below.

The method of the present invention is carried out using foil transfer technology. In other words, the method of the present invention comprises the step of preparing a transfer foil film that is obtained by coating an adhesive resin film with a foil made from a resistant material, applying the adhesive resin film surface of the transfer foil film to a desired section of an outer surface of the object whose strain is to be measured, and processing the transfer foil film to transfer a foil gauge pattern to the object via the adhesive resin.

First, in the step of preparing a transfer foil film that is obtained by coating an adhesive resin film with a foil made from a resistant material, the transfer foil film is prepared in accordance with the object whose strain is to be measured.

Next, the adhesive resin film surface of the transfer foil film is applied to a desired section of an outer surface of the object whose strain is to be measured. In this step, the transfer foil film is simply disposed at the desired section of the object, and heating or pressurizing, for example, are not performed.

Then, the transfer foil film is processed to transfer the foil gauge pattern to the object to be measured via the adhesive resin. In this specification, the processing is varied depending on the adhesive resins, and refers to drawing or pressing the transfer foil film so that the shape of the predetermined foil gauge pattern is transferred onto the surface of the object, using means such as heating, pressurizing, ultraviolet radiation, or electron beam radiation. Through this processing, the foil gauge pattern is transferred.

When the adhesive resin is a thermosetting adhesive resin, for example, the foil gauge pattern is transferred to the outer surface of the object to be measured by drawing or pressing the transfer foil film so that a predetermined pattern is transferred onto the surface of the object while heating. Examples of heating means include printing using a thermal head such as those used in heat sensitive transfer printers, heating and pressing the mold of a predetermined pattern, and drawing by laser irradiation.

In the case of a pressure sensitive adhesive resin, for example, it is possible to transfer the foil gauge pattern to the outer surface of the object to be measured by pressing the mold of the predetermined pattern onto the transfer foil, or by drawing a predetermined pattern while pressing the tip of a pin.

In the case of a photosensitive adhesive resin, it is possible to transfer the foil gauge pattern to the outer surface of the object to be measured by drawing a predetermined pattern with an ultraviolet beam, or by irradiating ultraviolet ray through a photomask with a predetermined pattern.

In this way, the foil gauge pattern is easily transferred onto the outer surface of the object to be measured.

If necessary, the foil gauge pattern that has been transferred can be further coated with a protective film. Examples of such a protective film include polyester films, for example. The protective film can be adhered such that it covers the entire foil gauge pattern, using an appropriate adhesive resin. Alternatively, a protective film can be formed by applying a molten or dissolved protective film material such that it covers the entire foil gauge pattern and then cooling or drying that film material. Alternatively, the protective film also can be formed by plating.

### Industrial Applicability

According to the method of the present invention, with extremely simple means, a strain gauge can be directly attached onto the surface of an object to be measured. Moreover, according to the method of the present invention, it is possible to attach a strain gauge to the object to be measured in the production line. Thus, it is possible to improve the productivity of the object to be measured to which a strain gauge is required to be attached. In particular, attaching of a foil strain gauge to bearings, for example, can be carried out easily, and thus the method of the present invention is useful for appropriately setting the pre-load. The method of the present invention also can be adopted for torque meters and pressure gauges, for example, as well.

## Claims

1. A method for producing a strain gauge, comprising the steps of:
preparing a transfer foil film that is obtained by coating an adhesive resin film with a foil made from a resistant material;
applying the adhesive resin film surface of the transfer foil film to a desired section of an outer surface of an object whose strain is to be measured; and
processing the transfer foil film to transfer a foil gauge pattern to the object via the adhesive resin.

2. The method of claim 1, wherein the resistant material is selected from the group consisting of copper-nickel alloys, nickel-chrome alloys, copper-manganese alloys, and iron-chrome alloys.

3. The method of claim 1 or 2, wherein a lead line is disposed on the transfer foil film such that the lead line is in contact with the foil made from the resistant material.

4. The method of any one of claims 1 to 3, wherein the adhesive resin is a thermosetting adhesive resin.

5. The method of any one of claims 1 to 4, wherein the object is a bearing.

6. A foil strain gauge made from a resistant material, which has been transferred onto an outer surface of a member via an adhesive resin.
